# EUROPEAN PATENT APPLICATION

(11) **EP 3 113 041 A1**
(43) Date of publication of application: **04.01.2017**
(21) Application number: 15175029.6
(22) Date of filing: 02.07.2015
(51) Int. Cl.: G06F 17/30, G06F 3/048

(54) **PROVIDING A USER INTERFACE**

(71) Applicant: Zeeris Oy, 00150 Helsinki (FI)
(72) Inventor: Solapuro, Riku, 00150 Helsinki (FI); Boskovic, Zeljko, 00150 Helsinki (FI)
(74) Representative: Papula Oy

(57) **Abstract**

According to an aspect, there is provided an apparatus comprising a user interface a display area for displaying in a matrix of search elements a subgroup of search elements of a virtual matrix of search elements, the matrix including at least two search elements in the vertical and horizontal directions, and a touch sensitive area, and a user input detector, wherein an input detected by the user input detector is configured to change at least some of the search elements in the matrix of search elements on the user interface to other previously hidden search elements in the virtual matrix.

## Description

### BACKGROUND

Presently, users are able to make web searches with various electronic devices such as PCs, laptops, tablets and smartphones. A network search, for example, a world-wide web search, is done by entering a search query at a search engine service, such as Google, Bing and Yahoo. Search results, i.e. hits are commonly presented as a list of search result elements typically including a clickable hyperlink to the website found and some content from that website. Usually this list of elements is displayed vertically in a consecutive order. Local searches may also be performed, for example, by receiving a search query from a user and searching the contents of a file locations stored on a user device or a local network.

As the world-wide web includes a lot of information, it may be difficult to browse through the information and to find the piece of information that the user is searching. The number of hits is often a large number, thousands, hundreds of thousands and even millions of hits. Similarly, when operating a user device, it may be challenging to find a certain piece of information from the network or the user device.

When searching a certain piece of information, the user usually needs to scroll information in the user interface and to select the next page or a number if the piece of information cannot be found on the current page. Such scrolling among the search results is rather cumbersome and slow.

### SUMMARY

The following presents a summary of the disclosure in order to provide a basic understanding to the reader. This summary is not an extensive overview of the disclosure and it does not identify key/critical elements or delineate the scope of the description. The purpose is to present concepts disclosed herein as a prelude to the more detailed description that is presented later.

In one aspect there is provided an apparatus comprising a user interface comprising an area for displaying in a matrix of search elements a subgroup of search elements of a virtual matrix of search elements, the matrix including at least two search elements in the vertical and horizontal directions; and a touch sensitive area, and a user input detector, wherein an input detected by the input detector is configured to change at least some of the search elements in the matrix of search elements on the user interface to other previously hidden search elements in the virtual matrix.

In one embodiment, in response to the input detected by the user input detector, the matrix is configured to be moved in the horizontal, vertical or diagonal direction in the virtual matrix.

In one embodiment, in response to the input detected by the user input detector, the size of the matrix is configured to be increased by zooming out to display an extended set of search elements of the virtual matrix in the matrix.

In one embodiment, in response to the input detected by the user input detector, the size of the matrix is configured to be decreased by zooming in to display a reduced set of search elements of the virtual matrix in the matrix.

In one embodiment, in addition or alternatively, the search elements in the virtual matrix are configured to be arranged so that search elements nearer to the center of the virtual matrix are considered to be more important.

In one embodiment, in addition or alternatively, the search elements are search filter elements.

In one embodiment, in addition or alternatively, the search element is at least one of a data file, time-based event indication and location-based indication.

In one embodiment, in addition or alternatively, the virtual matrix is classified into at least two data type rows or columns. In one embodiment, the rows or columns may be time-based or location-based.

In one embodiment, in addition or alternatively, the user input detector comprises at least one of a touch sensitive area on the user interface, a voice input detector and a movement input detector.

In one embodiment, in addition or alternatively, the touch sensitive area comprises a zooming area enabling adjusting the size of the matrix.

In another aspect there is provided a non-transitory computer readable medium having stored therein instructions executable by a computing device to cause the computing device to provide on a user interface in a matrix of search filter elements a subgroup of search elements of a virtual matrix of search elements, the matrix including at least two search elements in the vertical and horizontal directions, and to change at least some of the search elements in the matrix of search elements to other previously hidden search elements in the virtual matrix in response to an input detected by a user input detector.

In another aspect there is provided an apparatus that operates on a communication network to provide, to client devices, a user interface via the communication network, the apparatus comprising one or more processors; a non-transitory computer-readable medium storing instructions that cause providing on a user interface of a client device in a matrix of search filter elements a subgroup of search elements of a virtual matrix of search elements, the matrix including at least two search elements in the vertical and horizontal directions, and changing at least some of the search elements in the matrix of search elements to other previously hidden search elements in the virtual matrix in response to receiving an indication of an input detected by a user input detector of the client device.

In another aspect there is provided a method comprising causing display on a user interface in a matrix of search filter elements a subgroup of search elements of a virtual matrix of search elements, the matrix including at least two search elements in the vertical and horizontal directions, and changing at least some of the search elements in the matrix of search elements to other previously hidden search elements in the virtual matrix in response to an input detected by a user input detector.

In one embodiment, the method comprises moving the matrix in the horizontal, vertical or diagonal direction in the virtual matrix in response to the input detected by the user input detector.

In one embodiment, in addition or alternatively, the method comprises increasing the size of the matrix by zooming out to display an extended set of search elements of the virtual matrix in the matrix in response to the input detected by the user input detector.

In one embodiment, in addition or alternatively, the method comprises decreasing the size of the matrix by zooming in to display a reduced set of search elements of the virtual matrix in the matrix in response to the input detected by the user input detector.

In one embodiment, in addition or alternatively, the touch sensitive area comprises a zooming area enabling adjusting the size of the matrix.

In one embodiment, in addition or alternatively, the method comprises arranging the search elements in the virtual matrix so that search elements nearer to the center of the virtual matrix are considered to be more important.

In one embodiment, in addition or alternatively, the search elements are search filter elements.

In one embodiment, in addition or alternatively, the search element is at least one of a data file, time-based event indication and location-based indication.

In one embodiment, in addition or alternatively, the method comprises classifying the virtual matrix into at least two data type rows or columns. In one embodiment, the rows or columns may be time-based or location-based.

In one embodiment, in addition or alternatively, the user input detector comprises at least one of a touch sensitive area on the user interface, a voice input detector and a movement input detector.

In one embodiment, in addition or alternatively, the touch sensitive area comprises a zooming area enabling adjusting the size of the matrix.

In another aspect there is provided an apparatus comprising means for providing a user interface comprising a display area for displaying in a matrix of search elements a subgroup of search elements of a virtual matrix of search elements, the matrix including at least two search elements in the vertical and horizontal directions, and means for detecting user input, wherein an input detected by the means for detecting user input is configured to change at least some of the search elements in the matrix of search elements on the user interface to other previously hidden search elements in the virtual matrix.

In another aspect there is provided an apparatus that operates on a communication network to provide, to client devices, a user interface via the communication network. The apparatus comprises means for providing on a user interface of a client device in a matrix of search filter elements a subgroup of search elements of a virtual matrix of search elements, the matrix including at least two search elements in the vertical and horizontal directions; and means for changing at least some of the search elements in the matrix of search elements to other previously hidden search elements in the virtual matrix in response to receiving an indication of an input detected by a user input detector of the client device.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. The embodiments described below are examples only and the scope of protection shall not be limited to the presented embodiments. In the drawings:
**Figure 1** illustrates a user interface according to one embodiment;
**Figure 2** illustrates a user interface according to another embodiment;
**Figure 3A** illustrates a correspondence between a virtual matrix of search elements and a matrix displaying a subset of the search elements;
**Figure 3B** illustrates a correspondence between a virtual matrix of search elements and a matrix displaying a subset of the search elements;
**Figure 3C** illustrates a correspondence between a virtual matrix of search elements and a matrix displaying a subset of the search elements;
**Figure 3D** illustrates a correspondence between a virtual matrix of search elements and a matrix displaying a subset of the search elements;
**Figure 4A** illustrates a virtual matrix comprising search elements where the virtual matrix has been classified into three time-based columns;
**Figure 4B** illustrates a virtual matrix comprising search elements where the virtual matrix has been classified into three time-based columns;
**Figure 4C** illustrates a virtual matrix comprising search elements where the virtual matrix has been classified into three time-based columns;
**Figure 4D** illustrates a virtual matrix comprising search elements where the virtual matrix has been classified into three time-based columns;
**Figure 4E** illustrates a virtual matrix comprising search elements where the virtual matrix has been classified into three time-based columns;
**Figure 4F** illustrates a virtual matrix comprising search elements where the virtual matrix has been classified into three time-based columns;
**Figure 4G** illustrates a virtual matrix comprising search elements where the virtual matrix has been classified into three time-based columns;
**Figure 5** illustrates an apparatus according to one embodiment.
**Figure 6** illustrates a user interface according to another embodiment; and
**Figure 7** is a system diagram depicting a system for providing search information and network elements connected to the system.

Like reference numerals are used to designate like parts in the accompanying drawings.

### DETAILED DESCRIPTION

The detailed description provided below in connection with the drawings is intended as a description of the embodiments presented herein and is not intended to represent the only forms in which the present invention may be constructed or utilized. However, the same or equivalent functions and sequences may be accomplished by different embodiments.

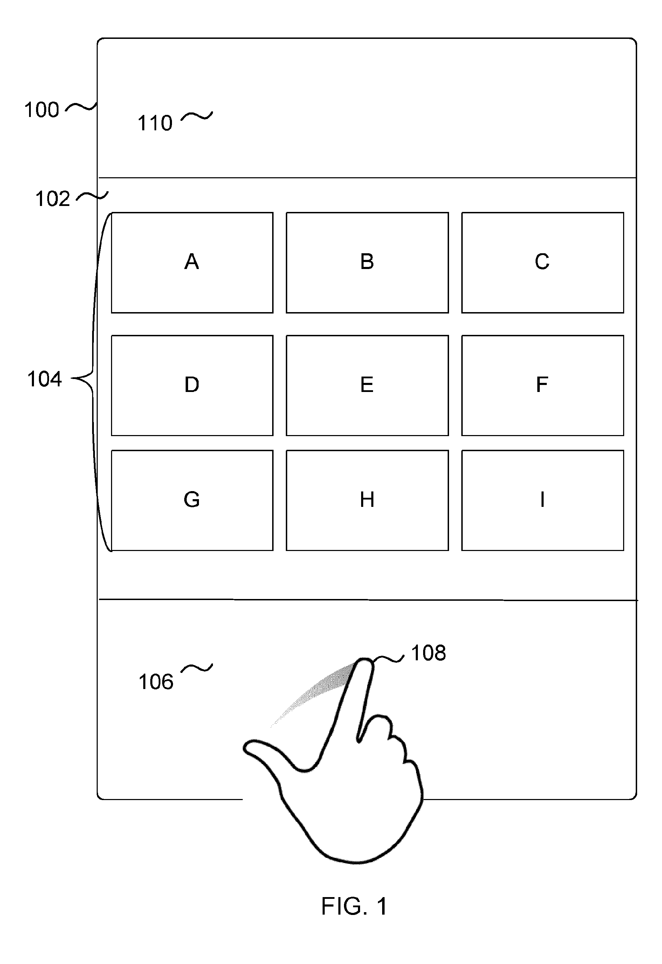

Figure 1 illustrates a user interface 100 according to one embodiment. The user interface 100 may be provided by any user operated device, for example, mobile phone, a cell phone, a smartphone, a handheld computer, a tablet computer, a Personal Digital Assistant (PDA), a laptop computer, a personal computer etc. The user interface 100 may comprise an area 110 in which a user may input a text string for search.

The user interface 100 comprises also an area 102 for displaying a set of search elements or search filter elements 104 (indicated with rectangles A-I) in a matrix of search elements. In this example, the matrix is a 3x3 matrix including nine search elements. In another embodiment, the size of the matrix may be different, for example, 2x2, 2x3, 3x3, 3x4, 4x4, 2x4 or any other size. The matrix size may also depend on the size of a display device providing the user interface 100. The user interface 100 may comprise also a touch input area 106 via which the user is able to provide touch input, for example, with a finger 108 or a stylus. The touch area 106 may act as a user input detector. Alternatively or in addition, any other way of controlling the user interface 100 and providing user input may be used, for example, voice, gestures, eye movement, motion etc. Therefore, a microphone, an accelerometer, a gyroscope and/or a camera may act as a user input detector.

In the example of Figure 1, the touch input area 106 is illustrated as a separate input area in the user interface 100. In another example, the touch input area 106 may not be a separate input area, and the user may be able to directly select and operate the search elements 104 via a touch on the area 102 on a touch-sensitive display. In another example, the touch input area 106 may be provided by external an input device other than a device that is displaying the text input area 110 and the area 102.

The term "search element" may refer to any element that is configured to provide a search filter and to restrict a scope of a search to be made. The term "search element" may also refer to an element with which a user is able to navigate in the user interface. The term "search" may refer to a web search that a user wishes to make based on a search string. Alternatively or in addition, the search may refer to a local device search, a local or private network search, or an isolated network search that a user wishes to make based on a search string or by selecting the search filter elements. The term "search element" may refer also to a data file, time-based event indication and location-based indication stored on the user operated device or provided by a communication network, for example, the internet. For example, the search element may be an image file, a calendar event, a message etc.

The user interface 100 may also refer to a user interface of a device used to navigate through data stored in the device or a network and functions and applications provided by the device. Thus, in one embodiment, the user need not input a specific search query but the user is able to carry out the search by selecting one or more search elements.

Additionally or alternatively, the area 110 may be used to display results of a search where one or more search filters relating to corresponding search filter elements have been applied. In another example, the user interface 100 may not include the area 110 at all.

When the user selects one of the search filter elements 104, a new set of search filter elements may be provided to the user in the area 102. The contents of the new set of search filter elements may depend on the selected search filter element. One or more search filter elements may be static, and they may remain unchanged also in the new set of search filter elements. Further, in one embodiment, one or more search filter elements may be adaptive. At least one of the search filter elements in the new set may depend on, for example, the context of the user or the device (for example, location, time, user or device status etc.). Further, when the user interface is initiated, the search filter elements appearing in the area 102 may not always be the same. At least one of the search filter elements may depend on, for example, the context of the user or the device (for example, location, time, user or device status etc.).

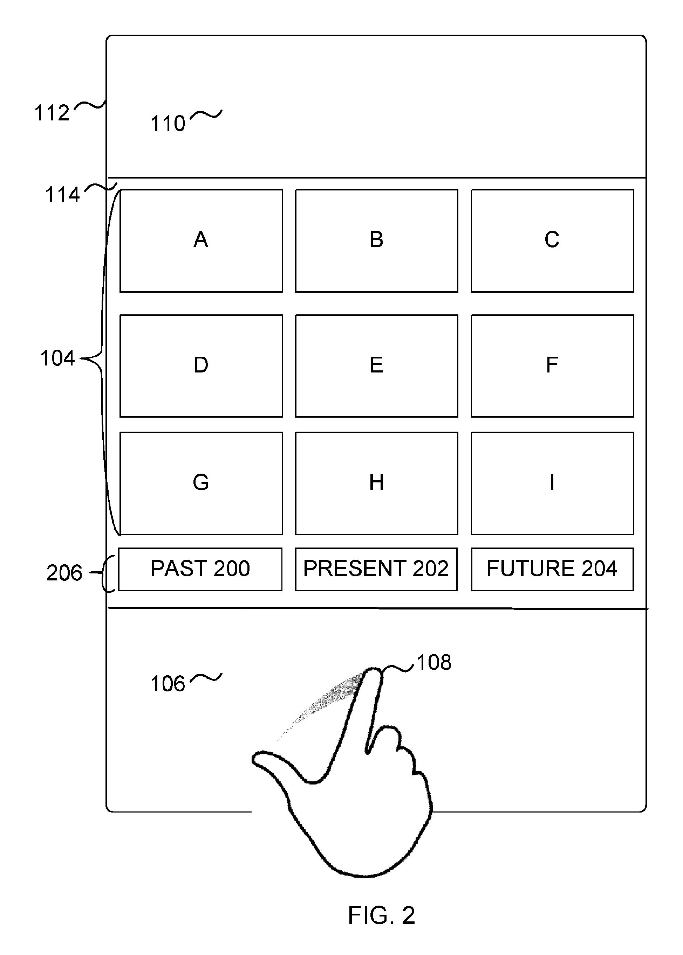

Figure 2 illustrates a user interface 112 according to another embodiment. The user interface 112 in Figure 2 is identical with the user interface 110 of Figure 1 with the exception that an area 114 for displaying the set of search elements 104 comprises also time domain search filter elements 200, 202, 204. The time domain search filter 200 "PAST" enables the user to direct the search to elements or information from the past. The time domain search filter 202 "PRESENT" enables the user to direct the search to real-time elements or information or close to real-time. The time domain search filter 204 "FUTURE" enables the user to direct the search to scheduled events and predictions. Although the time domain search filter elements 200, 202, 204 are illustrated in Figure 2 to appear below the search filter elements 104, their location on the user interface 100 may vary depending on the implementation.

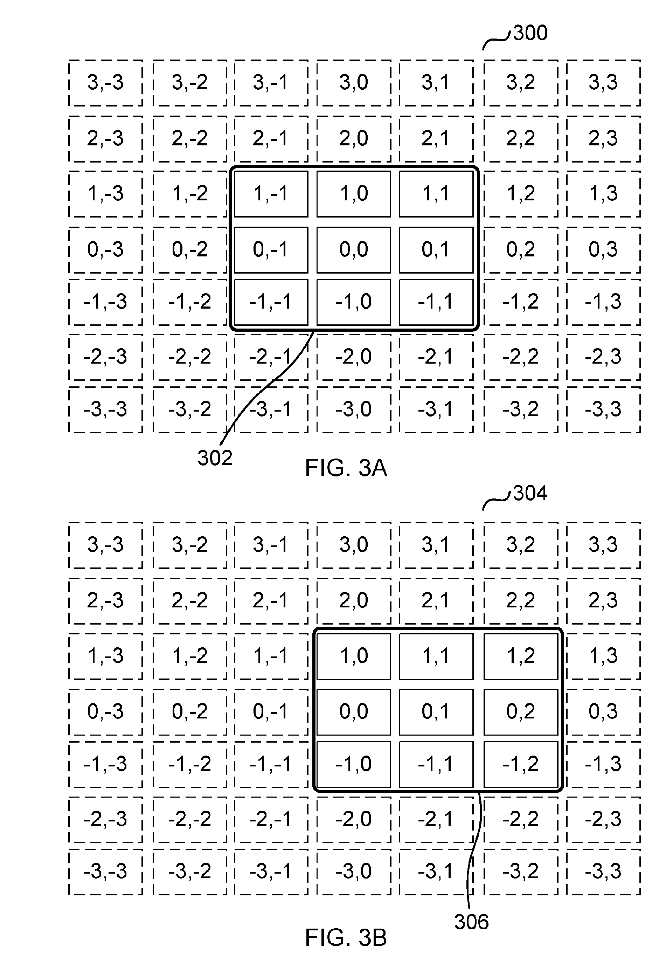

Figure 3A illustrates a correspondence between a virtual matrix 300 of search elements and a matrix 302 displaying a subset of the search elements of the virtual matrix 300. The search elements have been illustrated using coordinates wherein the search element (0,0) is in the origo in the middle of the virtual matrix 300. The origo may be indicated as reference point to the user in the virtual matrix 300. Using the example disclosed in Figure 1, a subgroup (i.e. the matrix 302) of search elements of the virtual matrix 300 is displayed at a time in the area 102 of the user interface 100.

When a user wishes to browse through additional search elements, the user may perform an operation on the touch sensitive area 106 causing a change of at least some of the search elements in the matrix 302 to other previously hidden search elements in the virtual matrix 300.

In one embodiment of Figure 3A, the search elements in the virtual matrix 300 are configured to be arranged so that search elements nearer the center of the virtual matrix are considered to be more important. The importance may be determined, for example, based on data relating to a specific user. In another example, the importance may be determined based on data relating to any user. For example, if the user interface is implemented with a server, the server has access to information relating to a plurality of users. This general information may be used when determining search elements in the virtual matrix 300.

Figure 3B illustrates a correspondence between a virtual matrix 304 of search elements and a matrix 306 displaying a subset of the search elements. Figure 3B illustrates the location of the matrix 306 when the matrix moves horizontally one step to the right. Some previously hidden search elements are now within the matrix 306 and some previously displayed search elements are now outside the matrix 306. The location of the matrix 306 may change, for example, due to a predetermined gesture on the touch sensitive area 106, for example, a swipe with a finger to a certain direction, tilting of a device displaying the user interface etc.

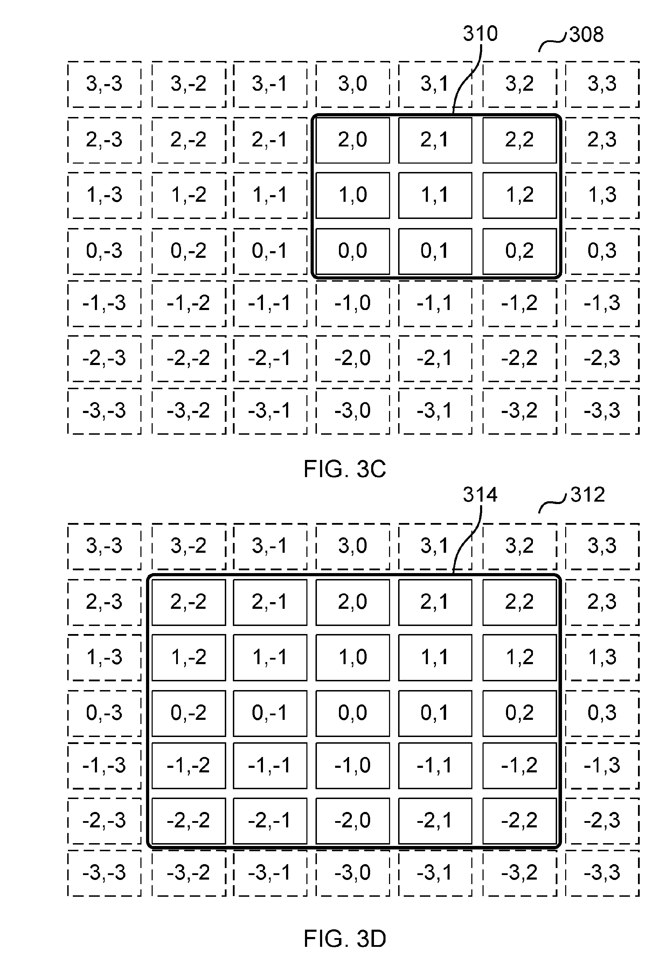

Figure 3C illustrates a correspondence between a virtual matrix 308 of search elements and a matrix 310 displaying a subset of the search elements. Figure 3C illustrates the location of the matrix 310 when the matrix moves vertically one step upwards. Some previously hidden search elements are now within the matrix 310 and some previously displayed search elements are now outside the matrix 310.

Figure 3D illustrates a correspondence between a virtual matrix 312 of search elements and a matrix 314 displaying a subset of the search elements. In Figure 3D the size of the matrix 314 has increased. In response to an operation performed on the touch sensitive area 106, the size of the matrix is configured to be increased by zooming out to display an extended set of search elements of the virtual matrix 312 in the matrix 314. The user interface 100 may include a special zooming area with which the user is able to zoom or an interface element that enables a user to change the size of the matrix 314. The performed operation may be any predetermined operation that can be interpreted to mean increasing the size of the matrix 314. When the user increases the size of the matrix 314, he is able to view more search elements at a time in the area 102.

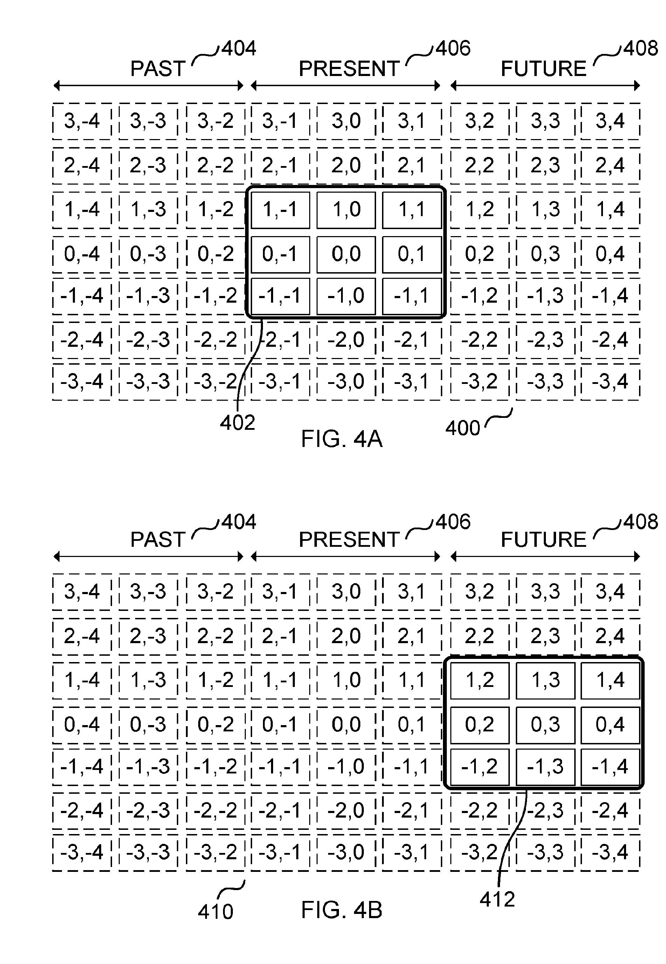

Figure 4A illustrates an example where a virtual matrix 400 is classified into three time-based columns 404, 406, 408. In another example, the classification may be based on location data, and the classification may also be row based instead of column based. Further, the number of classified columns or rows may be two or more.

In this example, the middle column 406 illustrates search elements labelled as "PRESENT", the left column 404 illustrates search elements labelled as "PAST", and the right column 408 illustrates search elements labelled as "FUTURE". In another example, a user may be able to set specific ranges in time to the column. For example, the left column 404 could be set to "2-4 weeks ago", the middle column 406 could be set as "0-2 weeks ago", and the right column 408 could be set as "0-2 weeks in the future".

When the user wishes to browse through the columns, he may change the location of a matrix 402 to display search elements from another column.

Figure 4B illustrates a virtual matrix 410 of search element when the user has decided to browse through search elements in "FUTURE" 408. Now the matrix 402 has moved to a new position 412 and displays only search elements relating to "FUTURE" 408.

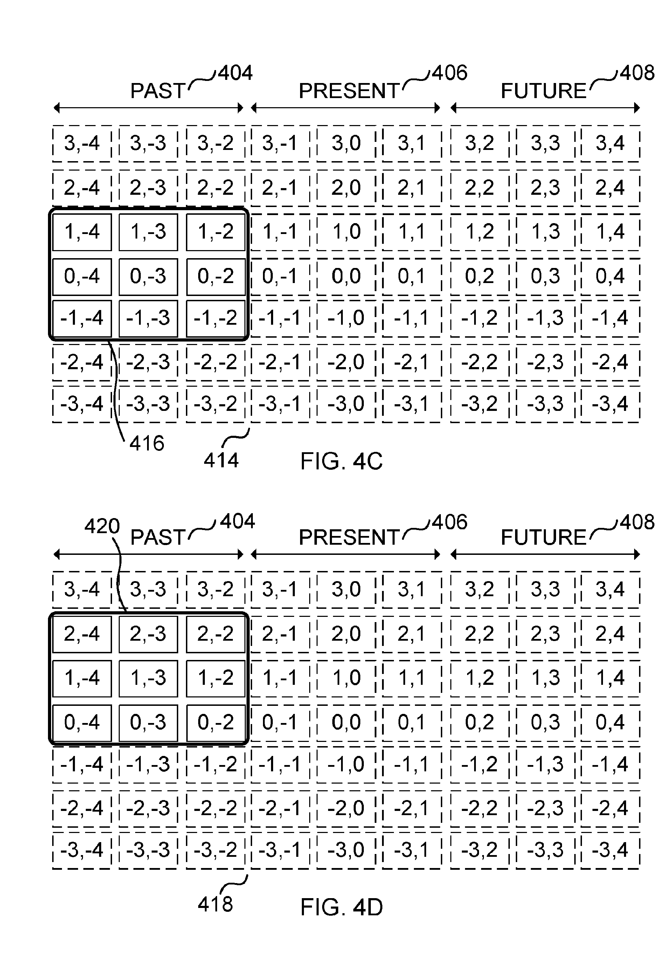

Figure 4C illustrates a virtual matrix 414 of search elements when the user has decided to browse through search elements in "PAST" 404. The matrix 420 has now moved to a position in the "PAST" column 404.

Figure 4D illustrates a virtual matrix 418 of search elements when the user wishes to browse through additional search element in the "PAST" 404 column. The user may move the matrix 416 to a new position vertically. All search elements in the vertical direction belong to the "PAST" column 404 as indicated in Figure 4D. If the user wishes to go back to the "PRESENT" column 406 or to the "FUTURE" column 408, this can be done by moving the position 420 of the matrix horizontally by making a predetermined gesture on the touch sensitive area 106, for example, a swipe with a finger to a certain direction or tilting the device providing the user interface.

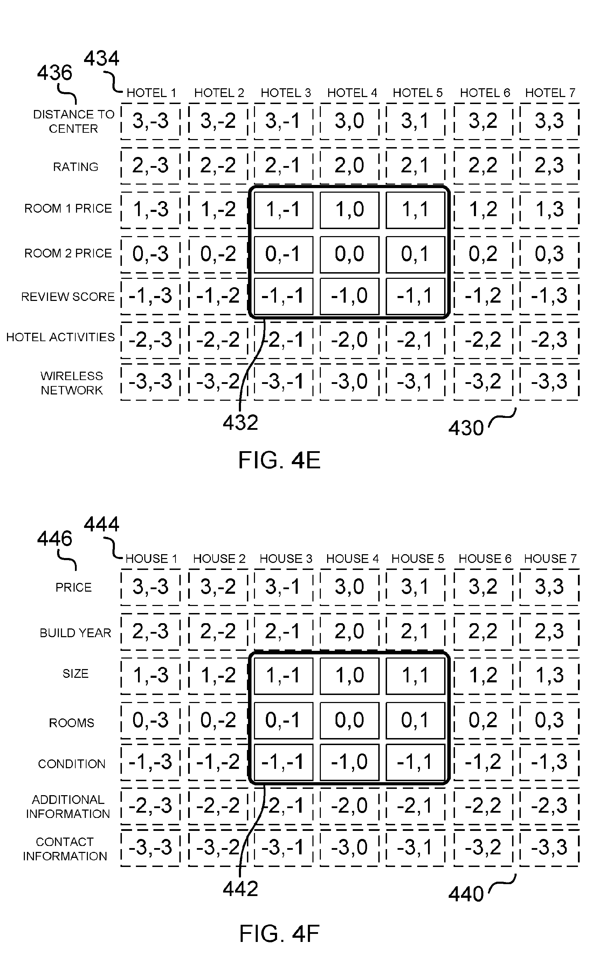

Figure 4E illustrates an example where a virtual matrix 430 is classified into a number of columns of a certain data type. In this embodiment, each column 434 represents a hotel alternative. The virtual matrix 430 may be a result of a user search for a hotel in a certain geographical area.

As already illustrated earlier, a matrix 432 displays a subset of the search elements of the virtual matrix 430. The various search elements have been illustrated using coordinates wherein the search element (0,0) is in the origo in the middle of the virtual matrix 430. Using the example disclosed in Figure 1, a subgroup (i.e. the matrix 432) of search elements of the virtual matrix 430 is displayed at a time in the area 102 of the user interface 100. In one embodiment, when displaying the results as illustrated in Figure 4E, it is possible to activate an action element (for example, "BOOK ROOM", for example, in the area 110 of the user interface 100).

Each row 436 represents different characteristics for the hotels 434. It may also be possible to sort the hotels 434 based on one of the rows 436, for example, distance to center, price, review score etc.

When the user wishes to browse through the columns, he may change the location of matrix 432 to display different elements of the virtual matrix 430.

Figure 4F illustrates another example where a virtual matrix 440 is classified into a number of columns of a certain data type. In this embodiment, each column 444 represents house alternatives from, for example, a real estate web page, mobile application user interface or an info board user interface. The virtual matrix 440 may be a result of a user search for a house in a certain geographical area or within a certain price range.

As already illustrated earlier, a matrix 442 displays a subset of the search elements of the virtual matrix 440. The various search elements have been illustrated using coordinates wherein the search element (0,0) is in the origo in the middle of the virtual matrix 440. Using the example disclosed in Figure 1, a subgroup (i.e. the matrix 442) of search elements of the virtual matrix 440 is displayed at a time in the area 102 of the user interface 100. In one embodiment, when displaying the results as illustrated in Figure 4E, it is possible to activate an action element (for example, "CALL AGENT" in the area 110 of the user interface 100).

Each row 446 represents different characteristics for the houses 444. It may also be possible to sort the hotels 434 based on one of the rows 436, for example, size, price, build year etc.

When the user wishes to browse through the columns, he may change the location of matrix 442 to display different elements of the virtual matrix 440.

Although Figures 4A-4F disclose specific embodiments of information to be displayed to a user, the data types that may be displayed to the user are not limited to these embodiments. The data types may comprise, for example, financial information, a booking service, real estate information or any other data type that can be categorized into columns and rows.

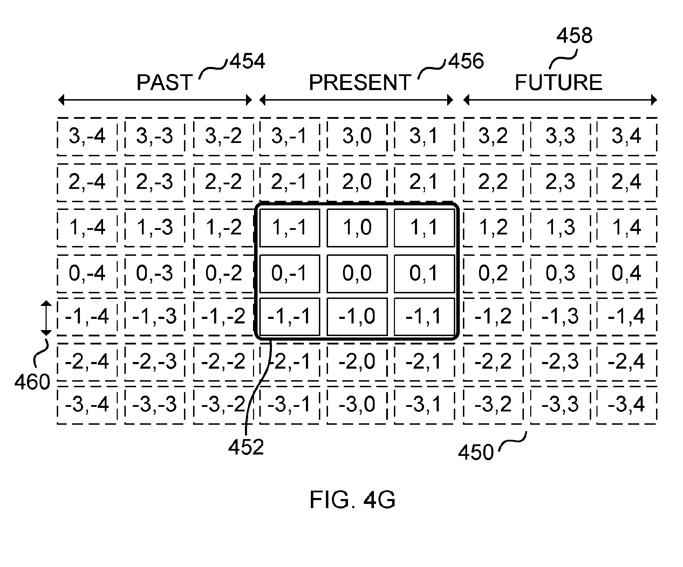

Figure 4G illustrates another example where a virtual matrix 450 is classified into three time-based columns 454, 456, 458. In another example, the classification may be based on location data, and the classification may also be row based instead of column based. Further, the number of classified columns or rows may be two or more.

In this example, the middle column 456 illustrates search elements labelled as "PRESENT", the left column 454 illustrates search elements labelled as "PAST", and the right column 458 illustrates search elements labelled as "FUTURE". In another example, a user may be able to set specific ranges in time to the column. Using the example disclosed in Figure 1, a subgroup (i.e. the matrix 452) of search elements of the virtual matrix 430 is displayed at a time in the area 102 of the user interface 100. When the user wishes to browse through the columns, he may change the location of a matrix 452 to display search elements from another column.

In this embodiment, each horizontal row, as illustrated with an arrow 460, may represent relevancy of the search elements (or some other dependency) in that row within a specific column ("PAST" 454, "PRESENT" 456 or "FUTURE" 458 in this example).

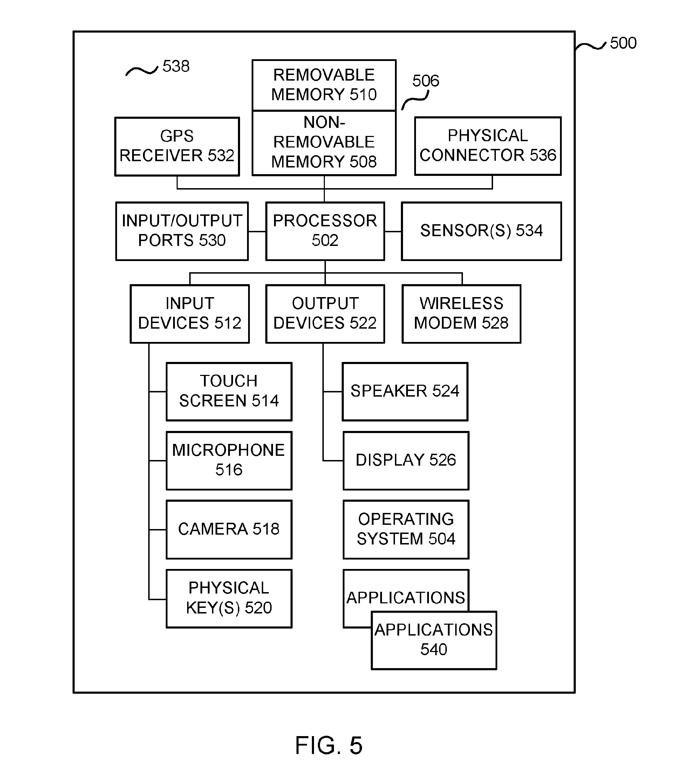

Figure 5 is a system diagram depicting an apparatus 500 for providing a user interface including a variety of optional hardware and software components, shown generally at 538. Any components 538 in the apparatus 500 can communicate with any other component, although not all connections are shown, for ease of illustration. The apparatus 500 can be any of a variety of computing devices that includes a camera (for example, a cell phone, a smartphone, a handheld computer, a tablet computer, a Personal Digital Assistant (PDA), etc.), a laptop computer, a personal computer, a server computer in a network etc.

The illustrated apparatus 500 can include a controller or processor 502 (e.g., signal processor, microprocessor, ASIC, or other control and processing logic circuitry) for performing such tasks as signal coding, data processing, input/output processing, power control, and/or other functions. An operating system 504 can control the allocation and usage of the components 538 and support for one or more application programs 540. The application programs can include common mobile computing applications (e.g., email applications, calendars, contact managers, web browsers, messaging applications), or any other computing application.

The illustrated apparatus 500 can include a memory 506. The memory 506 can include non-removable memory 508 and/or removable memory 510. The non-removable memory 108 can include RAM, ROM, flash memory, a hard disk, or other well-known memory storage technologies. The removable memory 510 can include flash memory or a Subscriber Identity Module (SIM) card, which is well known in mobile communication systems, or other well-known memory storage technologies, such as "smart cards". The memory 506 can be used for storing data and/or code for running the operating system 104 and the applications 540. If the apparatus 500 is a mobile phone or smart phone, the memory 506 can be used to store a subscriber identifier, such as an International Mobile Subscriber Identity (IMSI), and an equipment identifier, such as an International Mobile Equipment Identifier (IMEI). Such identifiers can be transmitted to a network server to identify users and equipment.

The apparatus 500 can support one or more input devices 512, such as a touchscreen 514, microphone 516, camera 518 and/or physical keys or a keyboard 520 and one or more output devices 522, such as a speaker 524 and a display 526. Some devices can serve more than one input/output function. For example, the touchscreen 514 and the display 526 can be combined in a single input/output device. The input devices 512 can include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods). Thus, in one specific example, the operating system 504 or applications 540 can comprise speechrecognition software as part of a voice user interface that allows a user to operate the apparatus 500 via voice commands. Further, the apparatus 500 can comprise input devices and software that allows for user interaction via a user's spatial gestures, such as detecting and interpreting gestures to provide input to a gaming application.

A wireless modem 528 can be coupled to an antenna (not shown) and can support two-way communications between the processor 502 and external devices, as is well understood in the art. The modem 528 is shown generically and can include a cellular modem for communicating with the mobile communication network and/or other radio-based modems (e.g., Bluetooth or Wi-Fi). The wireless modem 528 is typically configured for communication with one or more cellular networks, such as a GSM network for data and voice communications within a single cellular network, a WCDMA (Wide-band Code Division Multiple Access) network, an LTE (Long Term Evolution) network, a 4G LTE network, between cellular networks, or between the mobile apparatus and a public switched telephone network (PSTN) etc.

The apparatus 500 can further include at least one input/output port 530, a satellite navigation system receiver 532, such as a Global Positioning System (GPS) receiver, an accelerometer 534, a gyroscope, and/or a physical connector 536, which can be a USB port, IEEE 1394 (FireWire) port, an Ethernet port and/or RS-232 port. The illustrated components 538 are not required or all-inclusive, as any components can deleted and other components can be added. The microphone, accelerometer, gyroscope, touchscreen and/or the camera may act as a user input detector.

In another embodiment of Figure 5, the apparatus 500 is a server apparatus that provides a user interface to a user apparatus via a communication link, for example, via the internet. In this embodiment, the apparatus 500 need not include, for example, a touch screen, a display, a camera, a speaker etc. in order to be able to provide the user interface to the user apparatus. In a server based solution the server is also able to use information relating to a plurality of users when providing the user interface to a user device.

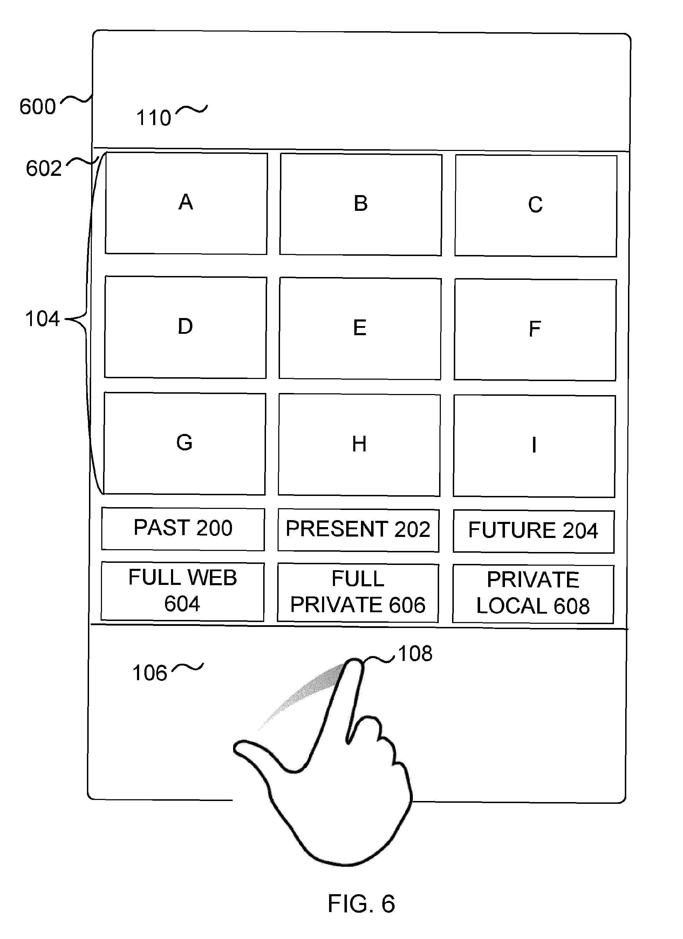

Figure 6 illustrates a user interface 600 according to another embodiment. An area 602 in the user interface 600 illustrated in Figure 6 is similar to the area disclosed in Figure 2 with the exception that additional search filter elements 604, 606, 608 are provided.

The search filter elements 604, 606, 608 enable the user to select the source of data from which results will be searched for. "FULL WEB" 604 provides search results from the entire internet. "FULL PRIVATE" 606 provides search results from all private data stored locally and/or on external service providers. "PRIVATE LOCAL" 608 provides search results from data within a local ecosystem (for example, a user device and/or connected devices and/or sensors).

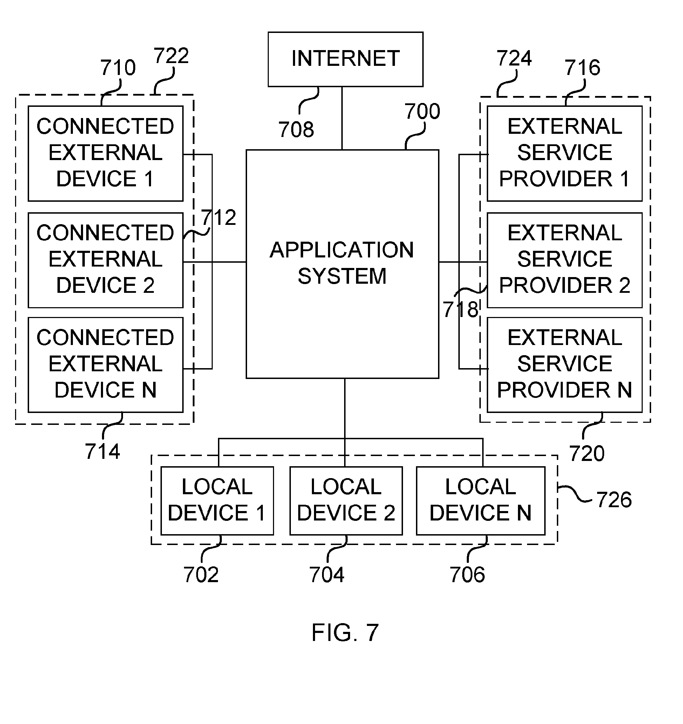

Figure 7 is a system diagram depicting a system 700 for providing search information and network elements connected to the system 700. The structure of the system 700 has been discussed in more detail in Figure 5.

One or more local devices 702, 704, 706 may be connected to the system 700. Further, one or more external devices 710, 712, 714 may be connected to the system 700. External devices 710, 712, 714 may refer to devices that are controlled by a user. The user may also determine that certain devices not controlled by the user himself belong to the external devices 710, 712, 714 (for example, user devices of other family members). External service providers 716, 718, 720 refer to service providers that contain information relating to the user, for example, various cloud services, Facebook, Instagram etc.

When the user indicates in the user interface 600 that a search filter element "FULL WEB" 604 is to be applied, the search is limited to the internet 708. When the user indicates in the user interface 600 that a search filter element "FULL PRIVATE" 606 is to be applied, the search is limited to all private data stored locally and on external service providers, illustrated using the dashed rectangles 722, 724 and 726. When the user indicates in the user interface 600 that a search filter element "PRIVATE LOCAL" 608 is to be applied, the search is limited to results from data within a local ecosystem (for example, a user device and/or connected devices and/or sensors), as illustrated with dashed rectangles 722 and 726.

When the search filter element "FULL PRIVATE" 606 is applied, it may refer to all private data including privately protected data, for example, from social networks (for example, the user's own social network posts that are visible only to the user's social network, which may not be fully public).

When the search filter element "PRIVATE LOCAL" 608 is applied, the system 700 may or may not be connected to any external network. For example, the local ecosystem may be completely an isolated network within an organization or in private possession.

A technical effect of one or more embodiments is that a user is able to intuitively and effectively browse through search filter elements or search results with the matrix structure. Further, it is also possible to indicate the significance of the matrix elements with the positions of the matrix elements.

A technical effect of one or more embodiments is that it is possible to provide in a visually effective manner and to provide a better base for a user to make decisions than using a traditional user interface for browsing through search results.

A technical effect of one or more embodiments is that it is possible to browse through search filter elements or search results based on specific data types.

The embodiments described hereinbefore may be used in any combination with each other. Several of the embodiments may be combined together to form a further embodiment. A product or a method, to which the invention is related, may comprise at least one of the embodiments described hereinbefore.

Computer executable instructions may be provided using any computer-readable media that is accessible by computing based device. Computer-readable media may include, for example, computer storage media such as memory and communications media. Computer storage media, such as memory, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device it will be appreciated that the storage may be distributed or located remotely and accessed via a network or other communication link, for example by using communication interface.

The term 'computer' or 'computing-based device' or 'apparatus' is used herein to refer to any device with processing capability such that it can execute instructions. Those skilled in the art will realize that such processing capabilities are incorporated into many different devices and therefore the terms 'computer' and 'computing-based device' and 'apparatus' each include PCs, servers, mobile telephones (including smart phones), tablet computers, set-top boxes, media players, games consoles, personal digital assistants and many other devices.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible storage media include computer storage devices comprising computer-readable media such as disks, thumb drives, memory etc. and do not include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs). For example, some or all of the device functionality or method sequences may be performed by one or more hardware logic components.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that with the advancement of technology, the basic idea of the invention may be implemented in various ways. The invention and its embodiments are thus not limited to the embodiments described above; instead they may vary within the scope of the claims.

## Claims

1. An apparatus, comprising:
a user interface comprising a display area for displaying in a matrix of search elements a subgroup of search elements of a virtual matrix of search elements, the matrix including at least two search elements in the vertical and horizontal directions; and
a user input detector, wherein an input detected by the user input detector is configured to change at least some of the search elements in the matrix of search elements on the user interface to other previously hidden search elements in the virtual matrix.

2. The apparatus of claim 1, wherein in response to the input detected by the user input detector, the matrix is configured to be moved in the horizontal, vertical or diagonal direction in the virtual matrix.

3. The apparatus of claim 1, wherein in response to the input detected by the user input detector, the size of the matrix is configured to be increased by zooming out to display an extended set of search elements of the virtual matrix in the matrix.

4. The apparatus of claim 1, wherein in response to the input detected by the user input detector, the size of the matrix is configured to be decreased by zooming in to display a reduced set of search elements of the virtual matrix in the matrix.

5. The apparatus of any of claims 1 - 5, wherein the search elements in the virtual matrix are configured to be arranged so that search elements nearer to the center of the virtual matrix are considered to be more important.

6. The apparatus of any of claim 1 - 5, wherein the search elements are search filter elements.

7. The apparatus of any of claims 1 - 5, wherein the search element is at least one of a data file, time-based event indication and location-based indication.

8. The apparatus of any of claims 1 - 7, wherein the virtual matrix is classified into at least two data type rows or columns.

9. The apparatus of any of claim 1 - 8, wherein the user input detector comprises at least one of a touch sensitive area on the user interface, a voice input detector and a movement input detector.

10. The apparatus of claim 9, wherein the touch sensitive area comprises a zooming area enabling adjusting the size of the matrix.

11. A non-transitory computer readable medium having stored therein instructions executable by a computing device to cause the computing device to
provide on a user interface in a matrix of search filter elements a subgroup of search elements of a virtual matrix of search elements, the matrix including at least two search elements in the vertical and horizontal directions; and
change at least some of the search elements in the matrix of search elements on the user interface to other previously hidden search elements in the virtual matrix in response to an input detected by a user input detector.

12. An apparatus that operates on a communication network to provide, to client devices, a user interface via the communication network, the apparatus comprising:
one or more processors;
a non-transitory computer-readable medium storing instructions that cause
providing on a user interface of a client device in a matrix of search filter elements a subgroup of search elements of a virtual matrix of search elements, the matrix including at least two search elements in the vertical and horizontal directions; and
changing at least some of the search elements in the matrix of search elements to other previously hidden search elements in the virtual matrix in response to receiving an indication of an input detected by a user input detector of the client device.

13. A method comprising:
causing display on a user interface in a matrix of search filter elements a subgroup of search elements of a virtual matrix of search elements, the matrix including at least two search elements in the vertical and horizontal directions; and
changing at least some of the search elements in the matrix of search elements to other previously hidden search elements in the virtual matrix in response to an input detected by a user input detector.

14. The method of claim 13, comprising:
moving the matrix in the horizontal, vertical or diagonal direction in the virtual matrix in response to the input detected by the user input detector.

15. The method of claim 13 or claim 14, comprising:
increasing the size of the matrix by zooming out to display an extended set of search elements of the virtual matrix in the matrix in response to the input detected by the user input detector.

16. The method of any of claims 13 - 15, comprising:
decreasing the size of the matrix by zooming in to display a reduced set of search elements of the virtual matrix in the matrix in response to the input detected by the user input detector.

17. The method of any of claims 13 - 16, comprising:
arranging the search elements in the virtual matrix so that search elements nearer to the center of the virtual matrix are considered to be more important.

18. The method of any of claims 13 - 17, comprising:
classifying the virtual matrix into at least two data type rows or columns.
